# EUROPÄISCHE PATENTANMELDUNG

(11) **EP 3 483 626 A1**
(43) Veröffentlichungstag der Anmeldung: **15.05.2019**
(21) Anmeldenummer: 18185791.3
(22) Anmeldetag: 26.07.2018
(51) Int. Cl.: G01S 7/481, G01S 7/497

(54) **VERFAHREN ZUM AUSRICHTEN VON OPTISCHEN BESTANDTEILEN EINER TIME-OF-FLIGHT-SENSORANORDNUNG**

(30) Priorität: 10.11.2017 DE 102017126381
(71) Anmelder: HUF Hülsbeck & Fürst GmbH & Co. KG, 42551 Velbert (DE)
(72) Erfinder: Kott, Christopher, 42109 Wuppertal (DE)
(74) Vertreter: Zenz Patentanwälte Partnerschaft mbB

(57) **Zusammenfassung**

Die Erfindung betrifft ein Verfahren zum Ausrichten von optischen Bestandteilen einer Time-of-Flight-Sensoranordnung (1) .

Das Verfahren weist die nachfolgenden Schritte auf:
Bereitstellen einer Leiterplatte (2) mit einem Lichtsensor und einem Beleuchtungsmittel,
Positionieren eines Lichtsensorrahmens (5a),
Positionieren eines Beleuchtungsmittelrahmens (5b),
wobei beispielsweise der Lichtsensorrahmen und der Beleuchtungsmittelrahmen Bestandteil eines Aufsatzelements (8) sind, das mit Steckstiften (9a, 9b, 9c, 9d) versehen ist,
Aufsetzen eines Fokussiermoduls auf dem Lichtsensorrahmen (5a),
Aufsetzen eines Beleuchtungsoptikmoduls auf dem Beleuchtungsmittelrahmen (5b),
Feinjustieren des Fokussiermoduls,
Feinjustieren des Beleuchtungsoptikmoduls.

## Beschreibung

Die Erfindung betrifft ein Verfahren zum Ausrichten optischer Bestandteile einer Time-of-Flight-Sensoranordnung.

Time-of-Flight-Sensoranordnungen, oft auch als Time-of-Flight-Kamera bezeichnet, werden häufig als 3D-Kamerasysteme genutzt. Die Funktionsweise der Time-of-Flight-Sensoranordnungen beruht auf der Ermittlung von Distanzen unter Ausnutzung der Laufzeitmessung von Licht. Es wird zunächst eine Szenerie pulsweise mit einem Beleuchtungsmittel ausgeleuchtet. Hiernach wird mittels eines Lichtsensors für eine Anzahl von Bildpunkten die Laufzeit ermittelt, welche das Licht für das Zurücklegen der Gesamtdistanz von Beleuchtungsmittel zu Objekt sowie von Objekt zu Lichtsensor benötigt hat. Derartige Time-of-Flight-Sensoranordnungen sind dem Fachmann aus der Praxis bekannt. Time-of-Flight-Sensoranordnungen bieten eine Vielzahl von Vorteilen wie beispielsweise einem einfachen Aufbau aus wenigen und üblicherweise unbeweglich anordenbaren Bauteilen, geringem Platzbedarf, hoher Bilderfassungsgeschwindigkeit sowie zuverlässiger Bilderfassung für eine Vielzahl von Oberflächen.

Nicht zuletzt aufgrund der genannten Vorteile haben sich Time-of-Flight-Sensoranordnungen in der vergangenen Zeit für automobile Anwendungen durchgesetzt, beispielsweise für Fahrassistenz- und Sicherheitssensoren oder auch Sensoren für Gestenerkennungen.

Aufgrund der weiter zunehmenden Bedeutung der optischen Sensorik im Automobilbereich besteht ein Interesse daran, die von Time-of-Flight-Sensoranordnungen gebotene Datenerfassung weiter zu verbessern, beispielsweise um Gestenerkennung zu erleichtern und Fehlauslösungen weitestgehend zu vermeiden.

Vor diesem Hintergrund liegt der Erfindung die Aufgabe zugrunde, eine kostengünstige Time-of-Flight-Sensoranordnung (nachfolgend auch als TOF-Sensoranordnung abgekürzt) bereitzustellen, die eine Erfassung von 3D-Laufzeitdaten für eine qualitativ hochwertige und zeiteffiziente Datenauswertung ermöglicht.

Die Aufgabe wird mit einem Verfahren mit den Merkmalen des Anspruchs 1 gelöst.

Das Verfahren sieht vor, dass eine Leiterplatte bereitgestellt wird, auf der ein Lichtsensor und ein Beleuchtungsmittel angeordnet sind. Oberhalb des Lichtsensors wird ein Lichtsensorrahmen positioniert, oberhalb des Beleuchtungsmittels wird ein Beleuchtungsmittelrahmen positioniert. Lichtsensorrahmen und Beleuchtungsmittel werden mit der Leiterplatte verbunden, beispielsweise mittels entsprechender Steckstifte, die in Verbindungslöcher der Leiterplatte eingeführt werden. Der Lichtsensorrahmen und der Beleuchtungsmittelrahmen umrahmen nach Anordnung auf der Leiterplatte jeweils den Lichtsensor beziehungsweise das Beleuchtungsmittel derart, dass der bei Betrieb der TOF-Sensoranordnung vorgesehene optische Weg von Beleuchtungsmittel zu beleuchtendem Objekt zurück zu dem Lichtsensor für das von dem Beleuchtungsmittel emittierte Licht durchlässig ist. Der Lichtsensorrahmen und der Beleuchtungsmittelrahmen dienen der Positionierung von optischen Bestandteilen der TOF-Sensoranordnung, wie nachfolgend erläutert wird.

Auf den Lichtsensorrahmen wird ein Fokussiermodul aufgesetzt. Das Fokussiermodul umfasst eine Sammeloptik, die der gezielten Bündelung und Führung des erfassten Lichts auf die Lichtsensorfläche dient. Insbesondere umfasst das Fokussiermodul bevorzugt Linsen und Blenden, mit denen das Licht bedarfsweise gesammelt, gebündelt und auf der Lichtsensoroberfläche verteilt wird.

Nach dem Aufsetzen des Fokussiermoduls auf den Lichtsensorrahmen wird ein iteratives Feinjustieren des Fokussiermoduls auf dem Lichtsensorrahmen vorgenommen. Mit anderen Worten ausgedrückt, wird das Fokussiermodul in seine bevorzugte und endgültige Position gebracht.

Weiterhin wird ein Beleuchtungsoptikmodul auf den Beleuchtungsmittelrahmen aufgesetzt. Das Beleuchtungsoptikmodul dient der Verteilung des aus dem Beleuchtungsmittel emittierten Lichts hin zu den zu beleuchtenden Szenerien.

Nach dem Aufsetzen des Beleuchtungsoptikmoduls auf den Beleuchtungsmittelrahmen erfolgt ein iteratives Feinjustieren des Beleuchtungsoptikmoduls.

Das iterative Feinjustieren des Beleuchtungsoptikmoduls erfolgt nach dem iterativen Feinjustieren des Fokussiermoduls.

Das Feinjustieren des Beleuchtungsoptikmoduls erfolgt in Abhängigkeit von mittels des Lichtsensors erfassten Lichtsensoraufnahmen von aus dem Beleuchtungsmittel emittiertem und an einer Reflexionsstruktur reflektierten Licht. Die Reflexionsstruktur ist der Sensoranordnung gegenüberliegend positioniert. Bevorzugt ist die Reflexionsstruktur als Reflexionsfläche ausgebildet, die parallel zu der Leiterplatte positioniert wird.

Es ist also vorgesehen, zum einen unmittelbar auf der Platine oder als Bestandteil der Platine bereitgestellte Lichtsensor- und Beleuchtungsmittel als Grundbestandteile der Time-of-Flight-Sensoranordnung bereitzustellen. Auf der Platine mit den auf dieser angeordneten Lichtsensor- und Beleuchtungsmitteln basierend wird die Sensoranordnung um die noch erforderlichen optischen Bestandteile, zumindest um das Fokussiermodul und das Beleuchtungsoptikmodul, ergänzt. Die Time-of-Flight-Sensoranordnung wird gemäß einer konkret vorgegebenen Vorgehensweise fertiggestellt. Diese Vorgehensweise sieht vor, zunächst das vor dem Lichtsensor angeordnete Fokussiermodul endgültig zu justieren. In Anschluss an diese endgültige Justage wird mit dem Beleuchtungsoptikmodul die vor dem Beleuchtungsmittel zu positionierende Optik justiert, um die gewünschte Beleuchtung der abzubildenden Szenerie erreichen zu können. Die Justage des Beleuchtungsoptikmoduls wird basierend auf Abbildungen durchgeführt, die mit dem bereits mit seiner feinjustierten Optik versehenen Lichtsensor erfasst werden. Die Justage erfolgt iterativ, das heißt, nach einem durchgeführten Justageschritt wird mit einer erneut erfassten Aufnahme ausgewertet, ob ein weiterer Justageschritt erforderlich ist und/oder ob mit dem jeweils zuletzt durchgeführten Justageschritt eine verbesserte Abbildung auf dem Lichtsensor herbeigeführt werden konnte.

Wesentlich für die Erfindung ist die Bereitstellung der erforderlichen Optiken in Gestalt des Fokussiermoduls und des Beleuchtungsoptikmoduls sowie von auf diese angepassten Aufnahmestrukturen, nämlich den Lichtsensorrahmen und den Beleuchtungsmittelrahmen. Dadurch wird erreicht, dass mit wenigen vorhandenen und aufeinander abgestimmten Bestandteilen eine zügige aber dennoch sehr genaue Fertigstellung der Time-of-Flight-Sensoranordnung möglich wird.

Es kann vorgesehen sein, dass zunächst das Aufsetzen beziehungsweise die Grobpositionierung sowohl von Fokussiermodul als auch von Beleuchtungsoptikmodul vorgenommen wird und nachfolgend das Feinjustieren des Fokussiermoduls und das Feinjustieren des Beleuchtungsoptikmoduls vorgenommen werden, dass also die Feinjustage des Fokussiermoduls mit aufgesetztem Beleuchtungsoptikmodul durchgeführt wird. Alternativ kann vorgesehen sein, dass nach dem Aufsetzen des Fokussiermoduls die Feinjustage des Fokussiermoduls erfolgt und erst nach der Feinjustage des Fokussiermoduls das Aufsetzen des Beleuchtungsoptikmoduls vorgenommen wird. Wesentlich ist in beiden Fällen, dass die beiden separat bereitgestellten Bauelemente Fokussiermodul und Beleuchtungsoptikodul in der erfindungsgemäßen Reihenfolge feinjustiert werden, dass also die Feinjustage des Beleuchtungsoptikmoduls nach der Feinjustage des Fokussiermoduls vorgenommen wird.

Dadurch, dass mit dem Beleuchtungsmittelrahmen und dem Lichtsensorrahmen Gerüste bereitgestellt werden, in denen Fokussiermodul und Beleuchtungsoptikmodul feinjustiert werden, können im Rahmen der von dem Beleuchtungsmittelrahmen und dem Lichtsensorrahmen zugelassenen Toleranzen absolute oder relativ zueinander vorliegende Positionierungsabweichungen des Lichtsensors, des Beleuchtungsmittels und/oder der beiden Gerüstelemente Beleuchtungsmittelrahmen und Lichtsensorrahmen ausgeglichen werden. Dabei versteht sich von selbst, dass das Maß, in welchem das Feinjustieren von Fokussiermodul und das Feinjustieren von Beleuchtungsoptikmodul möglich sind, von der jeweiligen Ausgestaltung der zur Aufnahme der beiden vorgesehenen Gerüstelemente Lichtsensorrahmen und Beleuchtungsmittelrahmen abhängig ist. Mit anderen Worten ausgedrückt, können der Lichtsensorrahmen und der Beleuchtungsmittelrahmen bedarfsweise auch darauf hin dimensioniert sein, in welchem Maße Positionierungsabweichungen des Lichtsensors und/oder des Beleuchtungsmittels erwartet oder toleriert werden sollen.

Gemäß einer vorteilhaften Weiterbildung des Verfahrens umfasst das Feinjustieren des Fokussiermoduls, dass ein Referenzmuster sukzessive von dem Lichtsensor abgebildet wird. Das Referenzmuster ist der Leiterplatte bzw. dem Lichtsensor gegenüberliegend, bevorzugt parallel zu der Leiterplatte orientiert, positioniert. Es kann sich beispielsweise um ein Bild, insbesondere ein Muster, handeln, welches in einer Entfernung von etwa 400 bis 600 mm, bevorzugt 500 mm, von der Lichtsensorebene beabstandet positioniert wird.

Das Feinjustieren des Fokussiermoduls umfasst eine Höhenjustage und eine Winkeljustage des Fokussiermoduls. Die Höhenjustage sieht vor, dass sukzessive Höhenpositionierungsschritte in einer zur Lichtsensorebene senkrechten Richtung vorgenommen werden. Nach einem Höhenpositionierungsschritt wird die Schärfe der Abbildung des Referenzmusters auf dem Lichtsensor bewertet. Nach einer wenigstens einmaligen Erhöhung der Schärfe wird bei einer Reduzierung der Schärfe der unmittelbar vorangehende Höhenpositionierungsschritt rückgängig gemacht und die Höhenjustage beendet. Mit anderen Worten wird nach Vornahme eines Höhenpositionierungsschritts die Schärfe der Abbildung des Referenzmusters auf dem Lichtsensor daraufhin bewertet, ob der jeweils vorangehende Höhenpositionierungsschritt zu einer Verbesserung der Schärfe geführt hat. Dies wird solange wiederholt, bis ein weiterer Höhenpositionierungsschritt keine Verbesserung der Schärfe mehr herbeiführt. Wenn dies der Fall ist, wird der letzte Höhenpositionierungsschritt, der erstmalig zu einer Verschlechterung der Schärfe geführt hat, rückgängig gemacht und dadurch die optimale Höhe des Fokussiermoduls festgelegt. Die Bewertung der Schärfe, insbesondere ein hierfür für geeignet befundenes Referenzmuster sowie die Auswahl eines entsprechenden konkreten Bewertungsalgorithmus sind nicht Bestandteil der Erfindung und können durch Ausprobieren durch den Fachmann vorgenommen werden. Um sicherzustellen, dass die Höhenjustage in die richtige der in vielen Fällen nur zwei möglichen Richtungen durchgeführt wird, setzt das erfolgreiche Beenden der Höhenjustage voraus, dass wenigstens ein Höhenpositionierungsschritt zu einer Verbesserung der Schärfe geführt hat.

Die Durchführung der einzelnen Justageschritte wird bevorzugt durch einen geeignet eingerichteten Justageroboter vorgenommen. Dieser kann beispielsweise seine Bewegungen basierend auf piezoaktorischen Bauelementen durchführen und mir diesen das Fokussiermodul und/oder das Beleuchtungsoptikmodulmit hoher Positionierungsgenauigkeit bewegen. Die Ausführung der einzelnen Bewegungsschritte in Abhängigkeit von der Bewertung eines zuvor mit dem Lichtsensor aufgenommenen Abbildung bewirkt eine feedback-geregelte, iterative Justage der für die Funktionalität der Time-of-Flight-Sensoranordnung wesentlichen optischen Bestandteile Fokussiermodul und Beleuchtungsoptikmodul.

In vergleichbarer Weise wird in einer bervorzugten Ausführung alternativ, bevorzugt zusätzlich, eine Winkeljustage durchgeführt. Die Winkeljustage sieht vor, dass das Fokussiermodul in einem Drehpositionierungsschritt gedreht wird, wobei der Drehsinn bevorzugt in einer zur Lichtsensorebene parallelen Ebene liegt. Analog zu der Vorgehensweise bei der Höhenjustage wird zunächst ein erster Drehpositionierungsschritt vorgenommen, nach diesem Drehpositionierungsschritt die Schärfe der Abbildung des Referenzmusters auf dem Lichtsensor bewertet und diese Vorgehensweise so lange wiederholt, wie mit einem jeweils weiteren Drehpositionierungsschritt eine weitere Erhöhung der Schärfe erreicht wird. Wenn nach einem Drehpositionierungsschritt eine Reduzierung der Schärfe der auf dem Lichtsensor dargestellten Abbildung festgestellt wird, wird der unmittelbar vorangehende Drehpositionierungsschritt rückgängig gemacht und die Winkeljustage beendet.

Alternativ oder zusätzlich wird bevorzugt eine Kippjustage durchgeführt. Die Kippjustage umfasst sukzessive Verkippungsschritte des Fokussiermoduls in einer zu der Lichtsensorebene parallelen Ebene. Nach einem Verkippungsschritt wird die Schärfe der Abbildung des Referenzmusters auf dem Lichtsensor bewertet. Wenn nach einer wenigstens einmaligen Erhöhung der Schärfe ein weiterer Verkippungsschritt eine Reduzierung der Schärfe herbeiführt, wird der unmittelbar vorangehende Verkippungsschritt rückgängig gemacht und die Kippjustage beendet wird.

Da bei einer Verkippung der stärkste optische Effekt in den Randbereichen zu erwarten ist, kann in einer bevorzugten Ausführung vorgesehen sein, dass die Bewertung der Schärfe auf die Bewertung der Schärfe eines Randbereichs der Abbildung des Referenzbereichs beschränkt wird. Der Randbereich kann beispielsweise ein Rahmen des Referenzmusters sein, der zu den Außenkanten des Referenzmusters parallel ist und der 20 Prozent oder weniger als 20 Prozent der Fläche des Referenzmusters einnimmt.

Bevorzugt werden mehrere, beispielsweise zwei Kippjustagen durchgeführt, wobei eine erste Kippjustage eine Verkippung der Drehachse des Fokussiermoduls in einer ersten Kippebene und eine zweite Kippjustage eine Verkippung der Drehachse des Fokussiermoduls in einer zweiten Kippebene vorsieht, bevorzugt mit der ersten Kippebene und der zweiten Kippebene in zueinander orthogonaler Orientierung.

Die Schrittweiten bei den einzelnen Justageschritten kann konstant sein, sie kann aber auch bei einzelnen oder allen der sukzessive durchgeführten Justageschritte variiert werden. Eine Variation der Schrittweiten kann insbesondere in Abhängigkeit von einer Auswertung einer Sensoraufnahme des Lichtsensors erfolgen, die unmittelbar vor dem jeweiligen Justageschritt aufgenommen wird.

Gemäß einer Ausgestaltung des Verfahrens kann vorgesehen sein, dass eine Höhenpositionierungsschrittweite eines Höhenpositionierungsschritts in Abhängigkeit von einer Ortsabhängigkeit der Schärfe der Abbildung auf dem Lichtsensor ermittelt wird. Bevorzugt wird die Schrittweite in Abhängigkeit von der Ortsabhängigkeit der Schärfe in einem Zentralbereich des Lichtsensors erfasst. Beispielsweise kann die Schrittweite in Abhängigkeit von einem ortsabhängigen Gradienten eines die Schärfe beschreibenden Parameters gewählt werden.

Analog kann in einer Ausbildungsform eine Drehpositionierungsschrittweite eines Drehpositionierungsschritts in Abhängigkeit von einer Ortsabhängigkeit der Schärfe der Abbildung auf dem Lichtsensor ermittelt werden. Bevorzugt wird die Schärfe in einem Randbereich des Lichtsensors zur Bestimmung der Drehpositionierungsschrittweite für den nachfolgenden Drehpositionierungsschritt genutzt.

Auch die Ebenenpositionierungsschrittweite kann variabel sein und beispielsweise von dem Abstand einer Abbildung eines Referenzpunkts des Referenzmusters auf dem Lichtsensor von einem Sollpunkt des Lichtsensors abhängig sein, bevorzugt mit dem Abstand von einem Zentralpunkt des Lichtsensors als Maß für die gewählte Schrittweite.

In einer bevorzugten Weiterbildung ist vorgesehen, dass die Winkeljustage nach der Höhenjustage durchgeführt wird. Dadurch, dass die Höhenjustage in vielerlei Hinsicht einen höheren Einfluss auf die Schärfe der Abbildung hat, werden durch eine derartige Reihenfolge der einzelnen Justageschritte in vielen Fällen zügige und bessere Ergebnisse erreicht.

In einer Ausgestaltung des Verfahrens ist vorgesehen, dass das Feinjustieren des Fokussiermoduls eine Fokussiermodulebenenjustage umfasst. Das bedeutet, dass zumindest in einer ersten zur Lichtsensorebene parallelen Richtung, bevorzugt zusätzlich in einer zweiten zur Lichtsensorebene parallelen Richtung, Ebenenpositionierungsschritte des Fokussiermoduls vorgenommen werden. Nach einem Ebenenpositionierungsschritt wird eine Punktpositionierung der Abbildung des Referenzmusters auf dem Lichtsensor bewertet. Das bedeutet, dass ein vorgegebener Punkt auf dem Referenzmuster, das nicht unbedingt dasselbe Referenzmuster wie bei den bereits durchgeführten anderen Justageschritten sein muss, hinsichtlich der vorgegebenen Lage auf der Lichtsensorabbildung bewertet wird. Nach einer wenigstens erstmaligen Verbesserung der Punktpositionierung wird bei darauffolgender Verschlechterung der Punktpositionierung der unmittelbar vorangehende Ebenenpositionierungsschritt rückgängig gemacht und die Fokussiermodulebenenjustage beendet. Bevorzugt wird für die Fokussiermodulebenenjustage von einer relativ zueinander erfolgten Positionierung des Lichtsensors zu einem Punkt, beispielsweise einem Schnittpunkt zweier Linien, auf dem Referenzmuster ausgegangen. Die Positionsabweichung der Abbildung des Schnittpunkts auf dem Lichtsensor von seinem vorgesehenen Abbildungspunkt auf dem Lichtsensor wird durch die Ebenenpositionierung des Fokussiermoduls beseitigt.

Für das Verfahren ist bevorzugt vorgesehen, dass der Höhenpositionierungsschritt mit einer Positionierungsgenauigkeit von 5 µm oder besser vorgenommen wird. Alternativ oder zusätzlich ist für den Drehpositionierungsschritt eine Winkeleinstellgenauigkeit von 0,12 Winkelminuten oder besser vorgesehen. Diese Werte haben sich als guter Kompromiss zwischen Umsetzbarkeit und gutem Endergebnis erwiesen, wobei bei geringeren oder höheren Anforderungen an die

Abbildungsgenauigkeit angepasste Werte genutzt werden können.

Das Feinjustieren des Beleuchtungsoptikmoduls umfasst in einer bevorzugten Ausführungsform eine Beleuchtungsoptikmodulhöhenjustage in einer zu der Leiterplattenebene senkrechten Richtung. Die Beleuchtungsoptikmodulhöhenjustage sieht dabei vor, dass sukzessive Höhenpositionierungsschritte des Beleuchtungsoptikmoduls vorgenommen werden. Nach einer Emission von Licht, also einer Aktivierung des Beleuchtungsoptikmoduls mit bereits vor dem Beleuchtungsmittel angeordnetem Beleuchtungsoptikmodul, wird das Beleuchtungsmittel betrieben. Die Sensorantwort, also das von dem Lichtsensor erfasste Bild der Lichtreflexion, wird auf eine Lichtstärkenverteilung hin ausgewertet. Die Höhenpositionierung wird so lange in eine Richtung der Höhenpositionierung fortgesetzt, wie der jeweils letzte vorgenommene Höhenpositionierungsschritt eine Verbesserung der Gleichmäßigkeit der Lichtstärkenverteilung bewirkt hat; sobald ein weiterer der sukzessiven Höhenpositionierungsschritte eine Verschlechterung der Gleichmäßigkeit der Lichtstärkenverteilung gegenüber der vor diesem bestimmten Höhenpositionierungsschritt herbeigeführt hat, wird dieser unmittelbar vorangehende Höhenpositionierungsschritt rückgängig gemacht und die Höhenjustage beendet.

Die Gleichmäßigkeit der Lichtstärkenverteilung kann beispielsweise mittels einer Erfassung eines Lichtstärkegradienten oder auf ähnliche Weise von dem Fachmann durchgeführt werden, wobei die geeignete Auswertemethodik in Abhängigkeit unter anderem von den konkret verwendeten Bestandteilen der Time-of-Flight-Sensoranordnung sowie deren Ausformung empirisch von dem Fachmann ausgewählt werden kann.

Weiterhin wird eine erste Ebenenjustage des Beleuchtungsoptikmoduls zumindest in einer ersten zur Lichtsensorebene parallelen Richtung durchgeführt. Bevorzugt wird die erste Ebenenjustage durch eine zweite Ebenenjustage ergänzt, die in einer zweiten zur Lichtsensorebene parallelen Richtung vorgenommen wird.

Die Ebenenjustage sieht vor, dass sukzessive Ebenenpositionierungsschritte des Beleuchtungsoptikmoduls vorgenommen werden. Nach einem Ebenenpositionierungsschritt wird eine Lichtstärkenverteilung auf dem Lichtsensor erfasst. Nach einer wenigstens einmaligen Vergleichmäßigung der Lichtstärkenverteilung und einer durch einen weiteren Ebenenpositonierungsschritt wieder herbeigeführten Verungleichmäßigung der Lichtstärkenverteilung wird der unmittelbar vorangehende Ebenenpostionierungsschritt rückgängig gemacht und die Ebenenjustage des Beleuchtungsoptikmoduls beendet.

Gemäß einer Weiterbildung der Erfindung kann beispielsweise vorgesehen sein, dass eine Höhenpositionierungsschrittweite eines Höhenpositionierungsschritts in Abhängigkeit von der Lichtstärkenverteilung ermittelt wird, welche der Lichtsensor erfasst. Als Maß für die zu wählende Schrittweite kann beispielsweise eine Differenz zwischen minimaler und maximaler ermittelter Lichtstärke dienen.

Die Auswahl der Ebenenpositionierungsschrittweite bei Justage des Beleuchtungsoptikmoduls kann in Abhängigkeit von der Position des mit dem Lichtsensor erfassten Lichtstärkemaximums ermittelt werden, bevorzugt in Abhängigkeit von der Entfernung der Position des Lichtstärkemaximums relativ zu einem Zentralbereich des Lichtsensors.

Sowohl die Höhenpositionierung als auch die Ebenenjustage des Beleuchtungsoptikmoduls bewirken, dass der mit bereits feinjustiertem Fokussiermodul versehene Lichtsensor möglichst gleichmäßig mit Licht des Beleuchtungsmittels beaufschlagbar ist. Dadurch, dass eine möglichst gleichmäßige Lichtstärkenverteilung auf dem Lichtsensor erfasst wird, wenn ein Referenzreflektor vor der Time-of-Flight-Sensoranordnung positioniert ist, wird eine Fehlerfassung von vor der Sensoranordnung vorliegenden Strukturen oder Artefakten vermieden und die Erkennung von tatsächlich vorhandenen Strukturen verbessert. Für ein besonders gutes Ergebnis der Höhenpositionierung und/oder Ebenenjustage wird, bevorzugt für sowohl für die Höhenpositionierung als auch für die Ebenenjustage, eine parallel zu der Leiterplattenebene positionierte, diffus reflektierende, weiße Ebene als Reflexionsfläche verwendet.

Bevorzugt wird die Ebenenjustage des Beleuchtungsoptikmoduls nach dessen Höhenjustage durchgeführt.

Die Höhenpositionierungsschritte und/oder die Ebenenpositionierungsschritte zur Justage des Beleuchtungsoptikmoduls werden bevorzugt mit einer Positionierungsgenauigkeit von 5 µm oder besser vorgenommen.

Um die dauerhafte Fixierung von Fokussiermodul und Beleuchtungsoptikmodul auf möglichst effiziente und zuverlässige Weise dauerhaft zu gewährleisten, ist bevorzugt vorgesehen, dass zwischen Lichtsensorrahmen und Fokussiermodul ein Klebstoff angeordnet wird. Als Klebstoff ist beispielsweise UV-härtender Klebstoff vorgesehen, der nach dem Feinjustieren des Fokussiermoduls optional mit UV-Strahlung bestrahlt wird zum Aushärten des Klebstoffs. Analog ist bevorzugt vorgesehen, dass zwischen dem Beleuchtungsmittelrahmen und dem Beleuchtungsoptikmodul ein bevorzugt UV-härtender Klebstoff angeordnet wird, der besonders bevorzugt nach dem Feinjustieren des Beleuchtungsoptikmoduls mit UV-Strahlung bestrahlt wird zum Aushärten des Klebstoffs. Das Auftragen des, bevorzugt UVhärtenden, Klebstoffs auf dem Lichtsensorrahmen und/oder dem Beleuchtungsmittelrahmen ist bevorzugt noch vor dem Aufsetzen von Fokussiermodul beziehungsweise Beleuchtungsoptikmodul vorgesehen. Bevorzugt weisen Beleuchtungsmittelrahmen und/oder Fokussiermodul jeweils eine Klebstoffausnahme auf, beispielsweise in Form einer Nut, in welcher der, bevorzugt UVhärtende, Klebstoff eingebracht werden kann.

Bevorzugt sind Lichtsensorrahmen und Beleuchtungsmittelrahmen Bestandteil eines integralen Aufsatzelements. Durch Bereitstellen eines integralen Aufsatzelements können durch Positionieren nur eines einzigen Elements jeweils Aufnahmestrukturen sowohl für das Fokussiermodul als auch für das Beleuchtungsoptikmodul bereitgestellt werden. Dadurch wird das erfindungsgemäße Verfahren in besonders eleganter und zeiteffizienter Weise durchführbar gestaltet.

Weitere Einzelheiten, Merkmale und Vorteile des Gegenstands der Erfindung ergeben sich aus der nachfolgenden Beschreibung im Zusammenhang mit den Zeichnungen. Die Zeichnungen geben beispielhaft ein Ausführungsbeispiel der Erfindung wieder.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind.

Es zeigen:
Figs. 1 bis 5b: Einzelne Schritte einer Abfolge von Verfahrensschritten einer beispielhaften Ausbildung eines erfindungsgemäßen Verfahrens zum Ausrichten von optischen Bestandteilen einer Time-of-Flight-Sensoranordnung;
Fig. 6: eine Leiterplatte 2;
Fig. 7: eine auf Basis der in Fig. 6 dargestellten Leiterplatte hergestellte Time-of-Flight-Sensoranordnung.

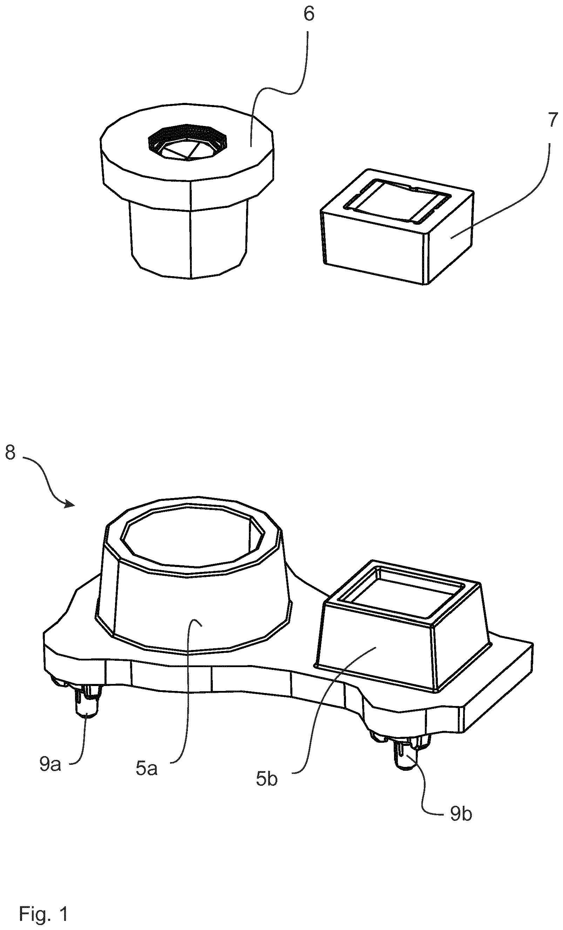

In Fig. 1 ist ein integrales, das heißt in diesem Fall einstückiges, Aufsatzelement 8 dargestellt. Aufsatzelement 8 ist einstückig mit Steckstiften 9a, 9b versehen, die in komplementäre Ausnehmungen einer Leiterplatte eingeführt werden können, um das Aufsatzelement mit der Leiterplatte zu verbinden. Optional kann das in die Leiterplatte eingesteckte Aufsatzelement 8 ergänzend mit einem Kleber fixiert werden oder formschlüssig durch thermisches Umformen befestigt werden. Das Aufsatzelement 8 weist Aufnahmeelemente 5a, 5b auf, die als Lichtsensorrahmen 5a zur Aufnahme eines Fokussiermoduls 6 und als Beleuchtungsmittelrahmen 5b zur Aufnahme eines Beleuchtungsoptikmoduls 7 ausgebildet sind. Der Lichtsensorrahmen 5a weist eine Aufnehmung auf, die in ihrer Querschnittsgestalt an die kreisrunde Querschnittsform des Fokussiermoduls 6 angepasst ist. Der Beleuchtungsmittelrahmen 5b ist in seiner rechteckigen Querschnittsgestalt an die Aufnahme des rechteckigen Querschnitts des Beleuchtungsoptikmoduls 7 angepasst.

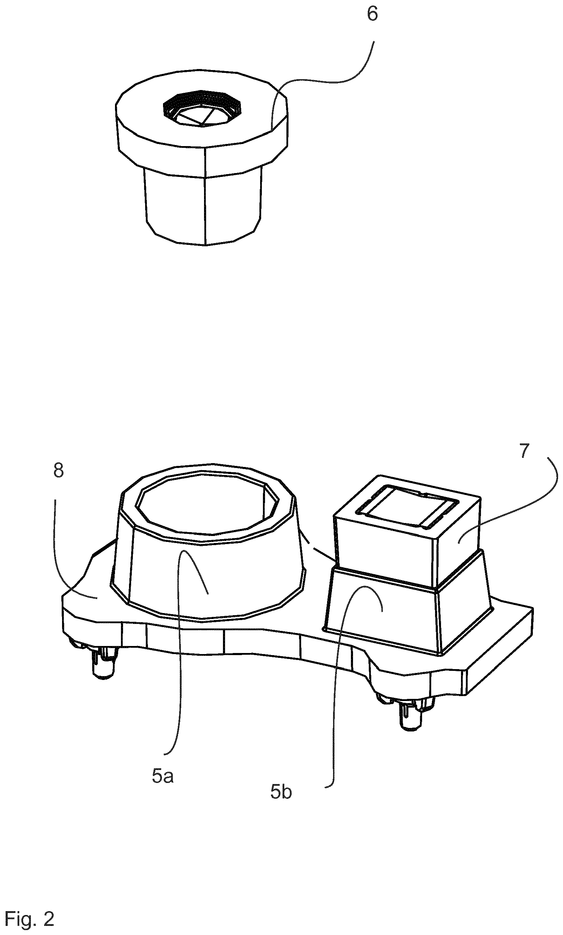

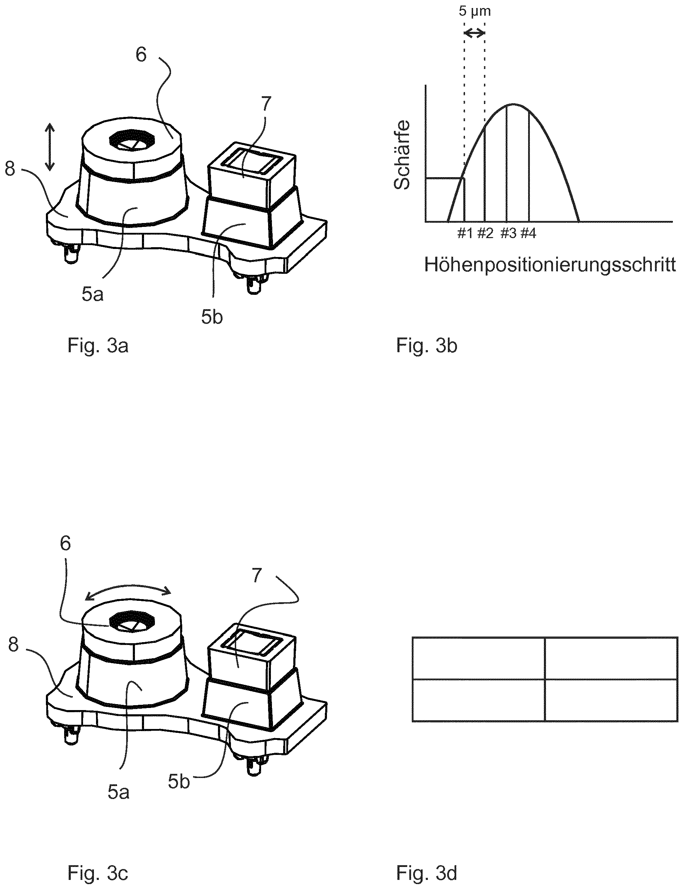

Wie Fig. 2 zu entnehmen ist, wird das Beleuchtungsoptikmodul 7 auf den Beleuchtungsmittelrahmen 5b aufgesetzt, um eine Grobpositionierung des Beleuchtungsoptikmoduls 7 relativ zu einem Beleuchtungsmittel vorzunehmen. Das Beleuchtungsmittel ist unterhalb des Beleuchtungsmittelrahmens 5b auf der Leiterplatte angeordnet und in den Darstellungen der Figs. 1 bis 5b nicht gezeigt. In der dargestellten Ausführungsform ist das Beleuchtungsmittel als Leuchtdiode ausgebildet. Nach Aufsetzen des Beleuchtungsoptikmoduls 7 erfolgt ein Aufsetzen des Fokussiermoduls 6 auf den Lichtsensorrahmen 5a. Anschließend wird eine Feinjustage des Fokussiermoduls 6 in eine Richtung des in Fig. 3a gezeigten Pfeils vorgenommen. Die Vorgehensweise des iterativen Feinjustierens, zunächst in eine der durch den in Fig. 3a dargestellten Pfeil gezeigten Richtungen, die zur

Lichtsensorebene senkrecht orientiert sind, ist in Fig. 3b funktionell dargestellt. Zunächst werden die Positionierungsschritte #1 bis #4 durchgeführt. Nach jedem der Höhenpositionierungsschritte #1 bis #3 wird jeweils eine Zunahme der Schärfe des auf dem Lichtsensor abgebildeten Bilds registriert. Nach einem weiteren Höhenpositionierungsschritt, in dem gezeigten Beispiel Schritt #4, wird eine Reduzierung der Schärfe festgestellt. In Reaktion auf die erstmalige Verschlechterung der Schärfe mit einem Höhenpositionierungsschritt wird der unmittelbar vorangehende Höhenpositionierungsschritt rückgängig gemacht. Anschließend wird die Höhenjustage beendet. In der dargestellten Ausgestaltung des erfindungsgemäßen Verfahrens werden Höhenpositionierungsschritte mit konstanter Schrittweite durchgeführt; in alternativen Verfahrensvarianten können aber auch variable Schrittweiten vorgesehen sein. Beispielsweise kann unmittelbar vor Durchführung eines Höhenpositionierungsschritts ein Schärfegradient in einem Zentralbereich des Lichtsensors ermittelt werden und die Schrittweite in Abhängigkeit von dem ermittelten Wert, beispielsweise unter Zuhilfenahme einer Referenztabelle, ausgewählt werden.

Nach Vornahme der Höhenjustage des Fokussiermoduls 6 wird die in Fig. 3c dargestellte Winkeljustage durchgeführt. Sukzessive werden Drehpositionierungsschritte durchgeführt, wobei eine Regelung der Winkeljustage bevorzugt durch Abbildung eines Musters, wie beispielsweise in Fig. 3d dargestellt, auf dem Lichtsensor gesteuert wird. Bevorzugt wird eine Außenkontur einer flächigen Struktur, beispielsweise des in Fig. 3d dargestellten Rechtecks, dargestellt und eine Winkeljustage in Abhängigkeit von einem Schärfegradienten der abgebildeten Struktur an den Außenpixeln des Lichtsensors vorgenommen.

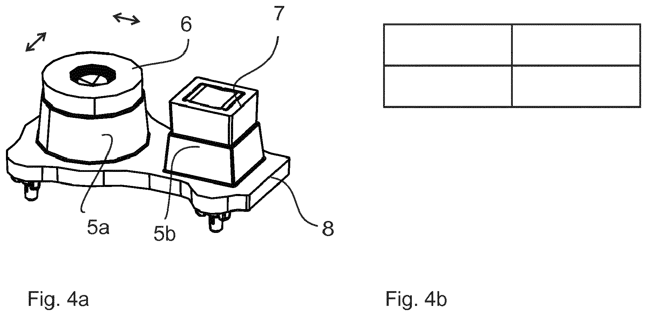

Abschließend wird eine Ebenenpositionierung des Fokussiermoduls dadurch geregelt durchgeführt, dass die Abbildung eines Punkts, beispielsweise des Schnittpunkts der in Fig. 4b gezeigten Linien, auf dem Lichtsensor durch schrittweise Bewegung des Fokussiermoduls 6 in ausgewählte oder alle der mit den in Fig. 4a dargestellten Pfeile gezeigten Richtungen eingestellt wird. Die Positionierung kann beispielsweise erfolgen, indem die Positionierung einer Abbildung des Schnittpunkts auf dem Lichtsensor bewertet und gegebenenfalls durch Bewegung des Fokussiermoduls die Positionskorrektur der Abbildung vorgenommen wird. Bevorzugt ist die Schrittweite in Abhängigkeit von der Abweichung des abgebildeten Schnitts zu dem Sollpunkt veränderlich und umso kleiner, desto näher die Entfernung des abgebildeten Schnitts von dem Sollpunkt ist.

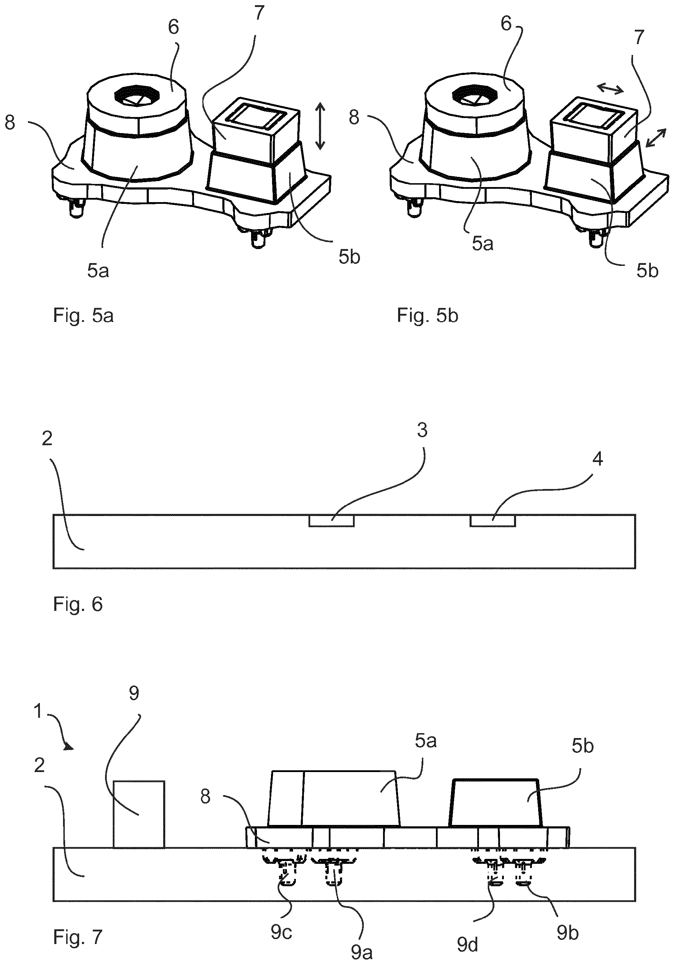

In Figs. 5a und 5b ist dargestellt, wie anschließend an die Feinjustage des Fokussiermoduls das Beleuchtungsoptikmodul 7 zunächst einer Beleuchtungsoptikmodulhöhenjustage (Fig. 5a) unterzogen wird und daran anschließend eine Ebenenjustage in die Richtungen der in Fig. 5b gezeigten Pfeile vorgenommen wird.

Fig. 6 ist eine Leiterplatte in einer Seitendarstellung zu entnehmen. Die Leiterplatte 2 weist einen als CCD-Sensorplatte ausgebildeten Lichtsensor 3 sowie ein als Laserdiode 4 ausgebildetes Beleuchtungsmittel 4 auf.

In Fig. 7 ist das Aufsatzelement 8 zusammen mit Lichtsensorrahmen 5a und Beleuchtungsmittelrahmen 5b dargestellt. Die in Fig. 1 dargestellte Anordnung ist eine im Prinzip bereits funktionsfähige Time-of-Flight-Sensoranordnung 1, wobei ausgehend von der Konstellation der Fig. 6 noch die Funktionsgenauigkeit durch Anordnen von Fokussiermodul 6 und Beleuchtungsoptikmodul 7 gemäß der in Figs. 1 bis 5b dargestellten oder einer anderen erfindungsgemäßen Vorgehensweise zu verbessern ist. Optional kann die Time-of-Flight-Sensoranordnung 1 noch eine Spot-Diode 9 zur Ausleuchtung des abzubildenden Szenarios aufweisen.

## Patentansprüche

1. Verfahren zum Ausrichten von optischen Bestandteilen einer Time-of-Flight-Sensoranordnung (1), aufweisend die Schritte:
Bereitstellen einer Leiterplatte (2) mit einem Lichtsensor (3) und einem Beleuchtungsmittel (4), die auf der Leiterplatte angeordnet sind,
Positionieren eines Lichtsensorrahmens (5a) oberhalb des Lichtsensors (3),
Positionieren eines Beleuchtungsmittelrahmens (5b) oberhalb des Beleuchtungsmittels (4),
Aufsetzen eines Fokussiermoduls (6) auf dem Lichtsensorrahmen (5a),
Aufsetzen eines Beleuchtungsoptikmoduls (7) auf dem Beleuchtungsmittelrahmen (5b),
Iteratives Feinjustieren des Fokussiermoduls (6) auf dem Lichtsensorrahmen (5a),
Nach dem Feinjustieren des Fokussiermoduls: Iteratives Feinjustieren des Beleuchtungsoptikmoduls (7) in Abhängigkeit von einer Lichtsensoraufnahme von mit dem Beleuchtungsmittel (4) emittiertem und an einer der TOF-Sensoranordnung (1) gegenüberliegend positionierten Reflexionsstruktur reflektiertem Licht.

2. Verfahren nach Anspruch 1, **dadurch gekennzeichnet, dass** das Feinjustieren des Fokussiermoduls (7) eine Abbildung eines der TOF-Sensoranordnung gegenüberliegend positionierten Referenzmusters aufweist, wobei
für eine Höhenjustage sukzessive
Höhenpositionierungsschritte in einer zur Lichtsensorebene senkrechten Richtung vorgenommen werden, nach einem Höhenpositionierungsschritt die Schärfe der Abbildung des Referenzmusters auf dem Lichtsensor (3) bewertet wird, wobei nach einer wenigstens einmaligen Erhöhung der Schärfe bei einer Reduzierung der Schärfe der unmittelbar vorangehende Höhenpositionierungsschritt rückgängig gemacht wird und die Höhenjustage beendet wird, und/oder
wobei eine Winkeljustage durchgeführt wird, wobei sukzessive Drehpositionierungsschritte in einem zur Lichtsensorebene parallelen Drehsinn vorgenommen werden, nach einem Drehpositionierungsschritt die Schärfe der Abbildung des Referenzmusters auf dem Lichtsensor (3) bewertet wird, wobei nach einer wenigstens einmaligen Erhöhung der Schärfe bei einer Reduzierung der Schärfe der unmittelbar vorangehende Drehpositionierungsschritt rückgängig gemacht wird und die Winkeljustage beendet wird, und/oder
wobei eine Kippjustage durchgeführt wird, wobei sukzessive Verkippungsschritte des Fokussiermoduls (7) zu einer zur Lichtsensorebene parallelen Ebene vorgenommen werden, nach einem Verkippungsschritt die Schärfe der Abbildung des Referenzmusters auf dem Lichtsensor (3) bewertet wird, wobei nach einer wenigstens einmaligen Erhöhung der Schärfe bei einer Reduzierung der Schärfe während eines weiteren Verkippungsschritts der unmittelbar vorangehende Verkippungsschritt rückgängig gemacht wird und die Kippjustage beendet wird.

3. Verfahren nach Anspruch 2, **dadurch gekennzeichnet,**
**dass** eine Höhenpositionierungsschrittweite eines Höhenpositionierungsschritts in Abhängigkeit von einer Ortsabhängigkeit der Schärfe der Abbildung auf dem Lichtsensor (3) ermittelt wird, bevorzugt in Abhängigkeit von der Ortsabhängigkeit der Schärfe in einem Zentralbereich des Lichtsensors, und/oder
**dass** eine Drehpositionierungsschrittweite eines Drehpositionierungsschritts in Abhängigkeit von einer Ortsabhängigkeit der Schärfe der Abbildung auf dem Lichtsensor ermittelt wird, bevorzugt in Abhängigkeit von der Ortsabhängigkeit der Schärfe in einem Randbereich des Lichtsensors (3).

4. Verfahren nach Anspruch 2 oder nach Anspruch 3, **dadurch gekennzeichnet, dass** die Winkeljustage nach der Höhenjustage durchgeführt wird.

5. Verfahren nach einem der Ansprüche 2 bis 4, wobei eine erste Kippjustage mit einer Verkippung der Drehachse des Fokussiermoduls in einer ersten Kippebene und eine zweite Kippjustage mit einer Verkippung der Drehachse des Fokussiermoduls in einer zweiten Kippebene durchgeführt werden, bevorzugt mit der ersten Kippebene und der zweiten Kippebene in zueinander orthogonaler Orientierung.

6. Verfahren nach einem der vorhergehenden Ansprüche, **dadurch gekennzeichnet, dass** das Feinjustieren des Fokussiermoduls (6) eine Fokussiermodulebenenjustage umfasst, wobei zumindest in einer ersten zur Lichtsensorebene parallelen Richtung sukzessive Ebenenpositionierungsschritte des Fokussiermoduls (6) vorgenommen werden, nach einem Ebenenpositionierungsschritt eine Punktpositionierung der Abbildung des Referenzmusters auf dem Lichtsensor (3) bewertet wird, wobei nach einer wenigstens einmaligen Verbesserung der Punktpositionierung bei einer Verschlechterung der Punktpositionierung der unmittelbar vorangehende Ebenenpositionierungsschritt rückgängig gemacht wird und die Fokussiermodulebenenjustage beendet wird.

7. Verfahren nach Anspruch 6, **dadurch gekennzeichnet, dass** eine Ebenenpositionierungsschrittweite eines Ebenenpositionierungsschritts in Abhängigkeit von dem Abstand einer Abbildung eines Referenzpunkts des Referenzmusters von einem Sollpunkt des Lichtsensors (3) ermittelt wird, bevorzugt in Abhängigkeit von dem Abstand von einem Zentralpunkt des Lichtsensors (3).

8. Verfahren nach einem der Ansprüche 2 bis 7, **dadurch gekennzeichnet,**
**dass** der Höhenpositionierungsschritt mit einer Positionierungsgenauigkeit von 5 µm oder besser vorgenommen wird, und/oder
**dass** der Ebenenpositionierungsschritt mit einer Positionierungsgenauigkeit von 5 µm oder besser vorgenommen wird, und/oder
**dass** der Drehpositionierungsschritt mit einer Winkeleinstellgenauigkeit von 0,12 Winkelminuten oder besser vorgenommen wird.

9. Verfahren nach einem der vorhergehenden Ansprüche, **dadurch gekennzeichnet, dass** das Feinjustieren des Beleuchtungsoptikmoduls (7) eine Beleuchtungsoptikmodulhöhenjustage in einer zu der Leiterplattenebene senkrechten Richtung aufweist, wobei sukzessive Höhenpositionierungsschritte des Beleuchtungsoptikmoduls (7) vorgenommen werden, eine Lichtstärkenverteilung auf dem Lichtsensor erfasst wird und nach einer wenigstens einmaligen Vergleichmäßigung der Lichtstärkenverteilung bei einer Verungleichmäßigung der Lichtstärkenverteilung der unmittelbar vorangehende Höhenpositionierungsschritt rückgängig gemacht wird und die Höhenjustage beendet wird, und wobei
eine erste Ebenenjustage durchgeführt wird in einer ersten zur Lichtsensorebene parallelen Richtung, wobei sukzessive Ebenenpositionierungsschritte des Beleuchtungsoptikmoduls (7) vorgenommen werden, eine Lichtstärkenverteilung auf dem Lichtsensor (3) erfasst wird und nach einer wenigstens einmaligen Vergleichmäßigung der Lichtstärkenverteilung bei einer Verungleichmäßigung der Lichtstärkenverteilung der unmittelbar vorangehende Ebenenpositionierungsschritt rückgängig gemacht wird und die Ebenenjustage des Beleuchtungsoptikmoduls (7) beendet wird.

10. Verfahren nach Anspruch 9, **dadurch gekennzeichnet, dass** die Ebenenjustage nach der Höhenjustage durchgeführt wird.

11. Verfahren nach Anspruch 9 oder nach Anspruch 10, **dadurch gekennzeichnet,**
**dass** eine Höhenpositionierungsschrittweite eines Höhenpositionierungsschritts in Abhängigkeit von der Lichtstärkenverteilung ermittelt wird, welche der Lichtsensor (3) erfasst, und/oder
**dass** eine Ebenenpositionierungsschrittweite eines Ebenenpositionierungsschritts in Abhängigkeit von der Position des Lichtstärkemaximums ermittelt wird, bevorzugt in Abhängigkeit von der Entfernung der Position des Lichtstärkemaximums relativ zu einem Zentralbereich des Lichtsensors (3).

12. Verfahren nach einem der Ansprüche 9 bis 11, **dadurch gekennzeichnet, dass**
der Höhenpositionierungsschritt mit einer Positionierungsgenauigkeit von 5 µm oder besser vorgenommen wird, und/oder
dass der Ebenenpositionierungsschritt mit einer Positionierungsgenauigkeit von 5 µm oder besser vorgenommen wird.

13. Verfahren nach einem der vorhergehenden Ansprüche, **dadurch gekennzeichnet,**
**dass** zwischen dem Lichtsensorrahmen (5a) und dem Fokussiermodul (6) ein UV-härtender Klebstoff angeordnet wird, der nach dem Feinjustieren des Fokussiermoduls (5a) mit UV-Strahlung bestrahlt wird zum Aushärten des Klebstoffs, und/oder
**dass** zwischen dem Beleuchtungsmittelrahmen (5b) und dem Beleuchtungsoptikmodul (7) ein UV-härtender Klebstoff angeordnet wird, der nach dem Feinjustieren des Beleuchtungsoptikmoduls (7) mit UV-Strahlung bestrahlt wird zum Aushärten des Klebstoffs.

14. Verfahren nach einem der vorhergehenden Ansprüche, **dadurch gekennzeichnet, dass** der Lichtsensorrahmen (5a) und der Beleuchtungsmittelrahmen (5b) Bestandteil eines integralen Aufsatzelements (8) sind.
